(19) Europäisches Patentamt
European Patent Office
Office européen des brevets

(11) EP 0 417 490 B1

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(21) Anmeldenummer: **90115536.6**

(22) Anmeldetag: **14.08.1990**

(51) Int Cl.6: **C07F 9/09**, B01F 17/00, C09J 11/06, C09B 63/00, C09C 3/08, C08G 63/91, C08K 9/04, C09D 7/02

(54) **Phosphorsäureester, Verfahren zu deren Herstellung und deren Verwendung als Dispergiermittel**

Phosphoric acid esters, process for their preparation and use as dispersing agent

Esters phosphoriques, procédé de préparation et utilisation comme agent dispersant

(84) Benannte Vertragsstaaten:
**AT BE CH DE DK ES FR GB IT LI LU NL SE**

(30) Priorität: **14.09.1989 DE 3930687**

(43) Veröffentlichungstag der Anmeldung:
**20.03.1991 Patentblatt 1991/12**

(73) Patentinhaber: **Byk-Chemie GmbH**
**D-46463 Wesel (DE)**

(72) Erfinder:
- **Haubennestel, Karlheinz, Dipl.-Ing.**
  **D-4230 Wesel (DE)**
- **Pritschins, Wolfgang, Dr.-Dipl.-Chem.**
  **D-4230 Wesel (DE)**

(74) Vertreter: **Türk, Dietmar, Dr. rer. nat.**
**Türk, Gille, Hrabal, Leifert**
**Patentanwälte**
**Brucknerstrasse 20**
**D-40593 Düsseldorf (DE)**

(56) Entgegenhaltungen:
**EP-A- 0 000 125** **US-A- 3 945 954**
- **US-A 2 026 785**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 417 490 B1

**Beschreibung**

Die Erfindung betrifft Phosphorsäureester und deren Salze, diese enthaltende Lacke und Formmassen, die Verwendung dieser Phosphorsäureester und deren Salze als Dispergiermittel und die damit beschichteten Feststoffe.

Um Feststoffe in flüssige Medien einzubringen, sind hohe mechanische Kräfte notwendig. Um diese Dispergierkräfte zu reduzieren, ist es üblich, Dispergiermittel anzuwenden, welche die Einarbeitung erleichtern. Hierbei handelt es sich im allgemeinen um oberflächenaktive Stoffe, auch Tenside genannt, von anionen- oder kationenaktiver sowie nichtionogender Struktur. Diese Stoffe werden in geringen Zusatzmengen entweder auf den Feststoff direkt aufgebracht oder dem zu dispergierenden Stoff zugesetzt. Durch ein solches Tensid wird der Dispergieraufwand reduziert. Bekannt ist weiterhin, daß solche Feststoffe aufgrund gegenseitiger Anziehungskräfte nach dem Dispergierprozeß wieder zum Reagglomerieren neigen können, was den zuvor aufgewendeten Dispergieraufwand zunichte macht und zu Problemen führt.

Eine unzulängliche Dispergierung macht sich bemerkbar durch Viskositätsanstieg in flüssigen Systemen, Glanzverluste und Farbtonverschiebungen in Lacken und Beschichtungen, ungenügende Farbkraftentwicklung in pigmentierten Formmassen sowie Verringerung der mechanischen Festigkeit in verstärkten Kunststoffen. Außerdem ist ein wesentlicher Faktor die hohe Viskosität von flüssigen Systemen, welche einen hohen Feststoffanteil beinhalten.

Um wirtschaftlich zu arbeiten, versucht man in solchen feststoffhaltigen Dispersionen den Feststoffanteil bei der Dispergierung möglichst hoch zu halten bei möglichst niedriger Viskosität des zu dispergierenden Systems. Dies ist von besonderer Wichtigkeit bei flüssigen Kunstharzsystemen, z. B. ungesättigten Polyesterharzen, wo bei möglichst hohem Feststoffanteil eine möglichst niedrige Anfangsverarbeitungsviskosität erreicht werden soll.

Die nachfolgenden Patentschriften beschreiben die Verwendung von Phophorsäureestern unterschiedlicher Struktur, vorzugsweise zur Diespergierung oder Behandlung von Pigmenten.

In der US-A-4,456,485 werden unter anderem saure oder neutrale Phosphorsäureester von Fettalkoholen und alkoxylierten Fettalkoholen als Behandlungsmittel für bestimmte Blaupigmente (Alkali-blue) beschrieben. In ähnlicher Weise beschreibt die EP-A-0 256 427 die Verwendung von vorbeschriebenen Phosphorsäureestern alkoxilierter Fettalkohole zur Herstellung von Pigmentdispersionen, die sich für wäßrige Anwendungen eignen sollen. Die US-A-4 720 514 beschreibt Pigmentdispersionen, hergestellt unter Verwendung von Phosphorsäureestern von Alkoxylaten unterschiedlicher Struktur. Die DE-A-2 726 854 beschreibt Phosphorsäureester von Polyolen, die als Dispergiermittel in wäßrigen Medien angewendet werden, aber auch als Builder in Waschmitteln eingesetzt werden können. Diese Phosphorsäureester sind von sehr komplexer Natur und enthalten noch freie Hydroxylgruppen, welche aus den eingesetzten Epoxyden stammen. Sie sind offensichtlich von polyvalenter Natur bezogen auf die vorhandenen freien Phosphorsäuregruppen in einem Molekül. Die US-A-4 717 424 geht von carboxylgruppenhaltigen Phosphorsäureestern aus, welche neben der Phosphorsäuregruppe noch eine freie -COOH Gruppe im Molekül enthalten. Es handelt sich hierbei nicht um Polymere. Diese Produkte werden zur Stabilisierung von Metallpigmenten gegen Wasserangriff eingesetzt.

Die US-A4 698 099 beschreibt Pigmentdispersionen, welche als Dispergiermittel Phosphorsäureester von monohydroxyterminierten Polyestern enthalten.

Die US-A-2,026,785 beschreibt Phosphorsäureester von Fettsäuremonoglyceriden, die in wäßrigen Systemen zur Behandlung von Leder, Textilien und Fasern und bei der Flotation von Erzen verwendet werden.

Mit den vorstehend beschriebenen Phosphorsäureestern können in manchen Fällen bereits gute Ergebnisse erzielt werden. Jedoch weisen diese Verbindungen keine breite Einsetzbarkeit in den modernen Bindemittel- und Kunststoffsystemen auf, wie sie zum Beispiel in High-Solids-Lacken, Wasserlacken, UV- und Elektronenstrahl-härtbaren Systemen oder Formmassen vom Typ LS-SMC bzw. LP-SMC (low shrink bzw. low profile-sheet molding compounds) zum Einsatz kommen.

Diese Verbindungen sind in unterschiedlichen Systemen nur unzureichend verträglich. Dies führt zu einer unzulänglichen Dispergierung durch nicht ausreichende Wechselwirkung mit dem umgebenden Medium und in vielen Fällen zu Ausfällungserscheinungen und damit verbundenen Mattierungen, Stippenbildung und Viskositätserhöhungen.

Der vorliegenden Erfindung liegt die Aufgabe zugrunde, Dispergiermittel zu finden, die die obigen Nachteile nicht oder in wesentlich geringerem Umfange aufweisen, die eine breite Anwendbarkeit sowohl in organischen als auch wäßrigen Systemen gewährleisten und die es insbesondere ermöglichen, möglichst hohe Festkörperanteile in flüssige organische oder wäßrige Systeme einzubringen bei möglichst geringer Viskosität des Gesamtsystems.

Gegenstand der Erfindung sind demgemäß Phosphorsäureester und deren Salze der Formel (I)

$$(OH)_{3-n}-\overset{\overset{O}{\|}}{P}-(O-R)_n \qquad ;$$

dadurch gekennzeichnet, daß R einen mindestens ein Ethersauerstoffatom (-0-) und mindestens eine Carbonsäureestergruppe (-OOO-) und/oder Urethangruppe (-NHCOO-) enthaltenden aliphatishen, cycloaliphatischen und/oder aromatischen Rest ohne Zerewitinoff-Wasserstoff mit einem mittleren Molekulargewicht $\overline{M}_n$ von 200 bis 10000 darstellt, wobei die Wasserstoffatome der aliphatischen Gruppen teilweise durch Halogenatome ersetzt sein können, und wobei das Verhältnis der Zahl der Ethersauerstoffatome zu der Zahl der Carbonsäureestergruppen und/oder Urethangruppen in jeder Gruppe R im Bereich von 1:20 bis 20:1 liegt, und daß n für 1 oder 2 steht, wobei-solche Phosphorsäureester ausgenommen sind, bei denen R ein von Urethangruppen freier Monoester einer monofunktionellen Fettsäure und eines Polyols ist.

Wesentlicher Bestandteil der erfindungsgemäßen Phosphorsäureester ist der Rest R. Der Rest R stellt bevorzugt den Rest eines Carbonsäureester- und/ oder Urethangruppen enthaltenden oxakylierten Monoalkohols dar. Besonders bevorzugt stellt R den Rest eines Carbonsäureester- und/oder Urethangruppen enthaltenden $C_1$-$C_4$-oxalkylierten Monoalkohols dar.

Ganz besonders bevorzugt stellt R den Rest eines Carbonsäureester - und/oder Urethangruppen enthatrenden ethoxylierten Monoalkohols dar.

Ein wesentliches Merkmal der Erfindung liegt darin, daß die Phosphorsäureester eine oder mehrere, gleiche oder verschiedene Gruppen R enthalten, die mindestens ein Ethersauerstoffatom, mindestens eine Carbonsäureestergruppe und/oder mindestens eine Urethangruppe enthalten. Diese Gruppen bewirken eine ausgezeichnete Verträglichkeit mit Bindemitteln von Lacken und Formmassen. Es ist möglich, daß die Gruppen R in untergeordneter Menge auch noch andere Sauerstoff und Stickstoff enthaltende Gruppen enthalten, z. B. Carbonsäureamid- oder Harnstoff-Gruppen. Diese können dadurch entstehen, daß die Startalkohole noch eine Carbonsäureamidgruppe enthalten oder eine Aminogruppe , die mit Isocyanatgruppen reagieren könnte. Es handelt sich dabei jedoch mehr oder weniger um Verunreinigungen. Grundsätzlich sollten pro Rest R nicht mehr als eine derartige weitere Gruppe vorhanden sein.

In dem mindestens ein Ethersauerstoffatom und mindestens eine Carbonsäureestergruppe und/oder eine Urethangruppe enthaltenden aliphatischen, cycloaliphatischen und/oder aromatischen Rest ohne Zerewitinoff-Wasserstoff Liegt das Verhältnis der Zahl der Ethersauerstoffatome zu der Zahl der Carbonsäureestergruppen und/oder Urethangruppen in einem Bereich von 1:20 bis 20:1 vor. Bevorzugt liegt dieses Verhältnis im Bereich von 1:10 bis 10:1, besonders bevorzugt im Bereich von 1:5 bis 5:1 vor.

Das mittlere Molekulargewicht $\overline{M}_n$ der Gruppe R beträgt von 200 bis 10000, bevorzugt von 300 bis 5000 und besonders bevorzugt von 400 bis 2000. Dieses Molekulargewicht kann man bestimmen durch Feststellung des Molekulargewichts der zur Herstellung der Verbindung der Formel I verwendeten Ausgangsprodukte. Es kann auch anhand der Endprodukte gegebenenfalls nach hydrolytischer Abspaltung der Gruppen ROH ermittelt werden.

Eine bevorzugte Ausführungsform der vorliegenden Erfindung ist ein Phosphorsäureester, in dem in der Gruppe R auf die Summe von 10 Ethersauerstoffatomen und Carbonsäureestergruppen höchstens eine Urethangruppe entfällt. Es ist bevorzugt, daß auf die Summe von 20 Ethersauerstoffatomen und Carbonsäureestern höchstens eine Urethangruppe entfällt. Es ist besonders bevorzugt, daß in der Gruppe R im wesentlichen keine Urethangruppen enthalten sind.

Weiterhin ist Gegenstand der Erfindung die Verwendung der erfindungsgemäßen Phosphorsäureester als Dispergiermittel und als Dispersionsstabilisatoren. Gegenstand der Erfindung sind weiterhin in flüssige Systeme einzuarbeitende pulver- oder faserförmige Feststoffe, die mit diesen Phosphorsäureestern als Dispergiermittel und als Dispersionsstabilisatoren beschichtet sind. Pulver- oder faserförmige Feststoffe sind solche, Nie sie gemäß dem Stand der Technik mit Dispergiermitteln beschichtet wurden, insbesondere organische und anorganische Pigmente, die in Anstrichmitteln, Überzugsmitteln, Formmassen oder sonstigen Kunststoffen eingesetzt werden.

Eine Untergruppe von derartigen Füllstoffen sind Fasern organischer und/oder anorganischer Natur, die ebenfalls als Füllstoffe oder Verstärkungsstoffe verwendet werden. Beispiele für Pigmente und Füllstoffe sind z. B. in der EP-A-0 270 126 aufgezählt. Weitere Beispiele für Pigmente sind Diketo-pyrrolo-pyrrole und magnetische Pigmente auf Basis von Mischoxiden von z. B. Eisen, Barium oder Cobalt oder reinem Eisen.

Derartige pulver- oder faserförmige Feststoffe mit einer Beschichtung von Dispergiermitteln und Dispersionsstabilisatoren gemäß der Erfindung werden in an sich bekannter Weise hergestellt, wie zum Beispiel in der EP-A-0 270 126 beschrieben, wobei anstelle der nach dem Stand der Technik bekannten Dispergiermittel die Phosphorsäureester gemäß der Erfindung eingesetzt werden. Auf dem Gebiet der Faserstoffe nennt man diese Dispergiermittel häufig auch Schlichten. Dazu können die Feststoffe, z. B. in einem Wirbelbett, mit einer Lösung oder Emulsion der Phosphorsäureester gemäß der Erfindung beschichtet werden. Das Lösungs- oder Emulsionsmittel kann dann entfernt werden. Es kann auch im Gemisch verbleiben, so daß Pasten erhalten werden. Eine andere Möglichkeit besteht darin, daß die zu beschichtenden Feststoffe in einem flüssigen Medium angeschlämmt und dieser Anschlämmung die Phosphorsäureester gemäß der Erfindung zugesetzt werden.

Auch hier kann das Anschlämmen in der Weise erfolgen, daß eine verarbeitbare Paste erhalten wird, wobei naturgemäß das flüssige Medium zum Anschlämmen angepaßt ist dem späteren Verwendungszweck dieser Paste, z. B. der Pigmentpaste. Solche Pasten sind übliche Handelsprodukte. Sie können auch Bindemittelanteile und/oder übliche Hilfs- und Zusatzstoffe für Lacke und Formmassen enthalten.

Es gibt mehrere Möglichkeiten, die erfindungsgemäßen Phosphorsäureester auf die Feststoffoberfläche von Pigmenten aufzubringen, wie zum Beispiel in der EP-A-0 270 126 beschrieben. Dieser Vorgang kann während oder nach der Synthese von Pigmenten durch Zusatz der Phosphorsäureester zur wäßrigen Pigmentsuspension, zur Pigmentsuspension in Wasser-Lösungsmittelgemischen oder zur Pigmentsuspension in Lösungsmitteln, gegebenenfalls vor, während oder nach einem Pigmentfinish oder bei ihrer Weiterverarbeitung im Anwendungsmedium erfolgen.

Gegenüber den unbehandelten Vergleichspigmenten zeichnen sich die erfindungsgemäßen Pigmente im Lack durch hervorragende rheologische Eigenschaften sowie durch deutlich verbessertes Glanz-, Viskositäts- und Flockulationsverhalten, häufig auch durch höhere Farbstärke aus.

Die Verwendung der erfindungsgemäßen Phosphorsäureester und deren Salze als Dispergiermittel und als Dispersionsstabilisatoren kann aber auch - wie gemäß dem Stand der Technik für bekannte Dispergiermittel - so erfolgen, daß die Phosphorsäureester irgendwelchen Systemen z. B. Lacken, Druckfarben, magnetischen Beschichtungen, flüssigen Kunstharzsystemen, Kunststoffmischungen und dergleichen vor, während oder nach der Dispergierung zugesetzt werden, die die einzuarbeitenden feststoffe wie Pigmente, Füllstoffe oder Fasern, bereits enthalten.

Beispiele für solche Kunstharze sind die sogenannten "sheet molding compounds" (SMC) oder "bulk molding compounds" (BMC), die aus Verstärkungsfasern und Füllstoffe enthaltenden ungesättigten Polyesterharzen bestehen. Ihre Herstellung und Verarbeitung ist zum Beispiel beschrieben in der DE-A-36 43 007 und in der Monographie von P.F. Bruins, "Unsaturated Polyester Technology", Gordon and Breach Science Publishers 1976, Seiten 211 bis 238. Zur Erhöhung der Steifigkeit und Verbesserung der Oberflächenqualität ist es im allgemeinen erforderlich, diesen Formstoffen möglichst große Füllstoffmengen zuzusetzen. Dadurch steigt die Viskosität der Harz/Füllstoff-Gemische so stark an, daß damit eine einwandfreie Tränkung der Verstärkungsfasern nicht mehr möglich ist, die Entlüftung behindert und die Topfzeit verkürzt wird. Durch Einsatz der erfindungsgemäßen Phosphorsäureester läßt sich die Viskosität der Harz/ Füllstoff-Gemische derart vermindern, daß auch bei sehr hohen Füllgraden noch eine einwandfreie Tränkung der Verstärkungsfasern gewährleistet ist.

Dadurch ist es möglich, den Gehalt an flammhemmenden Füllstoffen wie z. B. $Al(OH)_3$ und $Mg(OH)_2$ deutlich anzuheben, so daß das Kunstharzsystem einer höheren Brandschutzklasse entspricht und neue Einsatzgebiete für solche Kunststoffteile ermöglicht werden.

Ein weiterer Gegenstand der vorliegenden Erfindung ist ein Verfahren zur Herstellung der erfindungsgemäßen Phosphorsäureester und deren Salze. Die erfindungsgemäßen Phosphorsäureester werden hergestellt durch Reaktion von einem Phosphorsäureäquivalent einer Ester-bildenden Phosphorverbindung mit 1 bis 2 Äquivalenten einer Verbindung

R-OH

worin R die oben beschriebene Bedeutung hat.

Diese Reaktion ist zum Beispiel beschrieben in der US-A-4 183 766 und in Houben-Weyl "Methoden der organischen Chemie", Band XII/2, 4. Auflage, S. 143 ff. Unter "Phosphorsäureäquivalent" wird diejenige Menge an Phosphorsäureverbindung verstanden, die stöchiometrisch bei Umsetzung mit der Verbindung der Formel R-OH ein Mol einer Verbindung der Formel I liefert.

Wenn auf ein Phosphorsäureäquivalent einer Ester-bildenden Phosphorverbindung ein Äquivalent einer Verbindung R-OH eingesetzt wird, bilden sich Monoester. Wenn 2 Äquivalente eingesetzt werden, bilden sich Diester. Wenn zwischen 1 und 2 Äquivalenten eingesetzt werden, bildet sich ein Gemisch von Mono- und Diestern in Abhängigkeit von der eingesetzten Menge R-OH.

Es ist gemäß der Erfindung auch möglich, daß die unter die Formel I fallenden Diester unterschiedliche Gruppen R enthalten. Wenn also in der Formel I das Symbol n für die Zahl 2 steht, können die Gruppen R gleich oder verschieden sein. Verbindungen mit verschiedenen Gruppen R können dadurch hergestellt werden, daß 1 Phosphorsäureäquivalent einer Esterbildenden Phosphorverbindung zunächst mit einem Äquivalent einer Verbindung der Formel R-OH umgesetzt wird, um einen Monoester herzustellen, und dieser dann mit einem weiteren Äquivalent einer Verbindung der Formel R-OH umgesetzt wird, worin R eine unterschiedliche Bedeutung hat. Es ist auch möglich, ein Phosphorsäureäquivalent einer Ester-bildenden Phosphorverbindung mit einem Gemisch verschiedener Verbindungen der Formel R-OH umzusetzen, in denen R unterschiedliche Reste darstellt.

Wie dem Fachmann bekannt sind, können sich bei der Herstellung der Verbindungen der Formel I bei Verwendung von Polyphosphorsäuren als Ausgangsprodukte neben den Phosphorsäure-Monoestern wechselnde Mengen an Pyro- und Polyphosphorsäure-Monoestern als Primärprodukte bilden, wenn insbesondere höher kondensierte Polyphosporsäuren im Überschuß angewandt werden. (vgl. Houben-Weyl, Band XII/2, S. 147). Diese reagieren mit Wasser bzw. Feuchtigkeit, die häufig in pulverförmigen Feststoffen vorliegt, unter Bildung der Verbindungen der Formel I.

Unter einer Ester-bildenden Phosphorverbindung wird eine Phosphorverbindung verstanden, die durch Umsetzung mit einer Hydroxyverbindung Phosphorsäureester bilden kann. Als Ester-bildende phosphorverbindungen können zum Beispiel Phosphoroxichlorid, Phosphorpentoxid, Polyphosphorsäure und Acetylphosphat eingesetzt werden. Weitere Beispiele sind in der DE-A-27 26 854 beschrieben. Bevorzugt sind Phosphorpentoxid und Polyphosphorsäure.

Die Reaktion der oben erwähnten Ester-bildenden Phosphorverbindungen mit den Monohydroxyverbindungen erfolgt vorzugsweise ohne Lösungsmittel bei Temperaturen bis etwa 100°C. Die Reaktion kann aber auch in Gegenwart von geeigneten inerten Lösungsmitteln durchgeführt werden, wie zum Beispiel in der EP-A-193 019 beschrieben.

Die so erhaltenen Phosphorsäureester sind durch ihre verbleibenden aciden Gruppen zur Salzbildung befähigt. Sie können im Sinne der Erfindung als Dispergiermittel auch in Form von derartigen Salzen eingesetzt werden. Diese Salze werden aus dem erhaltenen Reaktionsprodukt durch Neutralisation mit organischen oder anorganischen Basen erhalten. Beispiele für solche organischen Basen sind primäre, sekundäre und tertiäre Amine sowie Aminoalkohole, wie beschrieben in US-A-4 698 099.

Beispiele für anorganische Basen sind $NH_3$, NaOH, KOH, LiOH, $Mg(OH)_2$ und $Ca(OH)_2$.

Als Monohydroxyverbindungen können solche eingesetzt werden, die mindestens ein Ethersauerstoffatom (-O-) und mindestens eine Carbonsäureestergruppe (-COO-) und/oder Urethangruppe (-NHCOO-) enthalten. Es handelt sich also um gemischte Polyether-Polyester, Polyether-Polyurethane oder Polyether-Polyester-Polyurethane, wobei die entsprechenden Gruppen in Blöcken oder statistisch angeordnet sein können. Besonders geeignet sind Blockstrukturen, weil diese leicht herstellbar sind und häufig ein besonders ausgewogenes Verträglichkeitsverhalten zeigen.

Beispiele für bevorzugte Polyether-Polyester sind solche, die durch Polymerisation eines Lactons, wie zum Beispiel Propiolacton, Valerolacton oder Caprolacton, deren substituierte Derivate, oder Gemische davon, mittels eines Monohydroxypolyethers als Startkomponente erhalten werden können. Als Startkomponenete für die Alkoxylierung können Monoalkohole, zweckmäßig mit 1 bis 30, vorzugsweise 1 bis 14 C-Atomen, wie Methanol, Ethanol, Propanol, n-Butanol, längerkettige, gesättigte und ungesättigte Alkohole wie Oxoalkohole, Cyclohexanol, Phenylethanol, Neopentylalkohol, aber auch fluorierte Alkohole und substituierte und unsubstituierte Phenole eingesetzt werden. Als Halogenatome, die in den aliphatischen Gruppen vorliegen können, sind also fluoratome bevorzugt. Solche Verbindungen sind bekanntlich oberflächenaktiv.

Jeweils können auch Gemische von vorgenannten Verbindungen eingesetzt werden. Die Monohydroxypolyether haben zweckmäßig ein Molekulargewicht im Bereich von etwa 100 bis 5000.

Diese Lactonpolymerisation wird nach bekannten Verfahren, wie zum Beispiel beschrieben in der EP-A-0 154 678, initiiert durch z. B. p-Toluolsulfonsäure oder Dibutylzinndilaurat bei Temperaturen von etwa 80°C bis 180°C durchgeführt.

Solche hydroxyfunktionellen Polyether-Polyester-Blöcke können in einem weiteren Syntheseschritt weiter alkoxiliert werden unter Anwendung der beschriebenen Verfahren. Die auf diese Weise aufgebauten Polyetherblocksequenzen können gleich oder verschieden sein.

Andere Beispiele für Polyether-Polyester sind solche, die durch Kondensation eines Glykols und einer dibasischen Säure in Anwesenheit der oben beschriebenen Monohydroxypolyether erhalten werden können. Die Bildung von Dihydroxyverbindungen kann durch Einsatz entsprechend stöchiometrischer Mengen an Monohdroxypolyethern zurückgedrängt werden.

Es können als Diole und dibasische Carbonsäuren die nach dem Stand der Technik für die Herstellung von Polyestern üblichen Verbindungen eingesetzt werden, wie sie zum Beispiel in der DE-A-27 26 854 erwähnt werden.

Bei Verwendung von Dialkoholen mit darin enthaltenen Ethergruppen, wie zum Beispiel Di-, Tri- oder Polyalkylenglykole, können auch Startalkohole ohne Polyethergruppen eingesetzt werden, wie sie zum Beispiel in der EP-A-0 154 678 beschrieben sind.

Ein weiteres Beispiel sind Polyether-Polyester, die erhältlich sind durch Kondensation einer Hydroxycarbonsäure in Anwesenheit von Monohydroxypolyethern, wie sie oben beschrieben wurden, zur Kontrolle des Molekulargewichtes. Es können auch Polyester-Polyether eingesetzt werden, die durch Alkoxilierung eines monohydroxyfunktionellen Polyesters erhalten werden können. Geeignet sind solche Polyester, die nach einem der vorstehend beschriebenen verfahren in Anwesenheit eines Mono-Alkohols erhalten werden können. Die Alkoxilierung kann nach bekannten Verfahren z. B. mit Alkylenoxiden, Ethylencarbonat oder Propylencarbonat erfolgen.

Als Monohydroxyverbindungen können auch Polyether-Polyurethane und/oder Polyether-Polyester-Polyurethane eingesetzt werden, die durch Additionsreaktion eines Diisocyanates mit einer Dihydroxyverbindung in Anwesenheit eines der oben beschriebenen Monohdroxypolyethers erhalten werden können. Die Reaktion läuft nach folgendem beispielhaften Reaktionsweg ab:

$$CH_3\text{-}(O\text{-}CH_2\text{-}CH_2)_{10}\text{-}OH + 5\ OCN\text{-}(CH_2)_6\text{-}NCO + 5\ HO\text{-}(CH_2)_4\text{-}OH \rightarrow$$

$$CH_3\text{-}(O\text{-}CH_2\text{-}CH_2)_{10}\text{-}[OOCNH\text{-}(CH_2)_6\text{-}NHCOO\text{-}(CH_2)_4]_5\text{-}OH$$

Als Dihydroxyverbindungen zum Aufbau dieser urethangruppenhaltigen Verbindungen werden Diole, zweckmäßig mit 2 bis 12 Kohlenstoffatomen, Polyoxyalkylenglykole und/oder dihydroxyfunktionelle Polyester mit bevorzugten Molekulargewichten von höchstens 2000 eingesetzt, wie sie zum Beispiel in der EP-0 270 126 zum Aufbau entsprechender Verbindungen beschrieben werden.

Bei Verwendung von Dihydroxyverbindungen mit darin enthaltenen Ethergruppen, wie zum Beispiel Di-, Tri- oder Polyalkylenglykole, können als Startalkohole anstelle der Monohydroxypolyether auch monohydroxyfunktionelle Polyester mit bevorzugten Molekulargewichten von höchstens 2000 oder andere aliphatische, cycloaliphatische und/oder aromatische Monoalkohole, bevorzugt mit 1 bis 20 Kohlenstoffatomen, zum Einsatz kommen.

Als Diisocyanate können die aus der Polyurethanchemie an sich bekannten aliphatischen, cycloaliphatischen und/oder aromatischen Diisocyanate mit 4 bis 15 Kohlenstoffatomen eingesetzt werden, wie zum Beispiel Tetramethylen-, Hexamethylen-, Trimethylhexamethylen, Dodekamethylen-, Isphoron-, Toluylen-, Diphenylmethandiisocyanat, Methylenbis(-4-cyclohexyldiisocyanat oder 1,4 Cyclohexanbis(methylisocyanat).

Durch Variation des Verhältnisses von Polyether-Gruppen zu Polyester bzw. Polyurethan-Gruppen kann die Verträglichkeit der erfindungsgemäßen Phosphorsäureester auf die unterschiedlichsten polymeren Verbindungen abgestimmt werden, welche in Überzugs- und Formmassen vorliegen, in denen die Phosphorsäureester gemäß der Erfindung zum Einsatz kommen. So sind z.B. Verbindungen der Formel I mit einem hohen Anteil an Polyether-Gruppen besonders geeignet für wäßrige Systeme.

Die Erfindung wird durch die folgenden Beispiele zusätzlich erläutert. Bei molekular uneinheitlichen Verbindungen, wie Polymeren, sind die angegebenen Molekulargewichte Durchschnittswerte nach Zahlenmittel ($\overline{M}_n$). Die Molekulargewichte bzw. mittleren Molekulargewichte $\overline{M}_n$ können nach üblichen Verfahren bestimmt werden, z. B. durch Ermittlung der OH-Zahl, der Säure-Zahl oder kryoskopisch. Der NCO-Gehalt der zum Einsatz kommenden Polyisocyanate sowie der Reaktionsverlauf der Addition wird durch Methoden ermittelt, wie sie beschrieben sind bei Saul Patai "The Chemistry of Cyanates and their Thioderivates", part I, chapter 5, 1977.

Sofern nichts anderes in den Beispielen und Anwendungsbeispielen gesagt ist, handelt es sich bei Teilen um Gewichtsteile und bei Prozenten um Gewichtsprozente.

Beispiel 1:

a) Unter Schutzatmosphäre werden 503 Teile eines Nonylphenolethoxilates mit einem mittleren Molekulargewicht von 360 mit 620 Teilen Caprolacton und 1,12 Teilen Dibutylzinndilaurat versetzt und auf 160° C erhitzt. Man rührt bei dieser Temperatur, bis ein Festkörpergehalt von 98 % erreicht ist. Der so erhaltene Polyether-Polyester hat ein mittleres Molekulargewicht von 800.

b) Zu 800 Teilen (1 Mol) dieser Monohydroxyverbindung werden bei Raumtemperatur unter Rühren und Feuchtigkeitsausschluß 84,5 Teile thermische Polyphosphorsäure mit einem Gehalt von 84 % Phosphorpentoxid gegeben. Nach 5 Stunden Rühren bei etwa 80° C wird ein Phosphorsäuremonoester mit einem mittleren Molekulargewicht von 880 erhalten.

Beispiel 2:

Es wird verfahren wie in Beispiel 1 beschrieben, nur wird, zur Herstellung eines Mono/Diester-Gemisches, statt Polyphosphorsäure 1 Mol Phosphorpentoxid auf 3 Mole Monohydroxyverbindung eingesetzt.

Beispiel 3:

a) Unter Schutzgas werden 48,3 Teile eines Decanol-gestarteten Caprolactonpolyesters mit einem mittleren Molekulargewicht von 400 (Herstellung analog zu Beispiel 1a), 20,2 Teile Phthalsäureanhydrid, 27 Teile Polyethylenglykol (Mn=200) und 0,3 Teile p-Toluolsulfonsäure mit 52 Teilen einer Aromatenfraktion (K:180° C) zum Sieden erhitzt. Das entstehende Reaktionswasser wird durch azeotrope Destillation aus dem Gemisch entfernt. Die Reaktion ist beendet, sobald sich kein Wasser mehr abscheiden läßt. Nach Abdestillieren des Lösungsmittels unter vermindertem Druck erhält man einen Monohydroxy-Polyether-Polyester mit einem mittleren Molekulargewicht von 800.

b) Die Umsetzung zum Phosphorsäuremonoester erfolgt analog zu Beispiel 1b.

Beispiel 4:

Die in Beispiel 3a beschriebene Monohydroxyverbindung wird analog zu Beispiel 2 mit $P_2O_5$ zum Phosphorsäuremono/diester-Gemisch umgesetzt.

Beispiel 5:

a) 71 Teile eines Nonylphenolethoxilates mit einem mittleren Molekulargewicht von 510 werden mit 93,7 Teilen Isophorondiisocyanat und 0,16 Teilen Dibutylzinndilaurat bis zum Einsetzen einer exothermen Reaktion (bis etwa

80° C) erhitzt. Danach werden 49,3 Teile Hexandiol-2,5 zugesetzt. Das Gemisch wird solange bei der sich einstellenden Temperatur (etwa 120° C) gerührt, bis sämtliche NCO-Gruppen abreagiert haben. Das erhaltene feste Polyether-Polyurethan hat ein mittleres Molekulargewicht von 1540.

b) Die Umsetzung zum Phosphorsäuremonoester erfolgt analog zu Beispiel 1b.

Beispiel 6:

Die in Beispiel 5a beschriebene Monohydroxyverbindung wird analog zu Beispiel 2 mit $P_2O_5$ zum Phosphorsäuremono/diester-Gemisch umgesetzt.

Beispiel 7:

In einer geschlossenen Apparatur mit Gasuhr werden 66 Teile eines Decanolgestarteten Caprolactonpolyesters mit einem mittleren Molekulargewicht von 500 mit 75 Teilen Ethylencarbonat und 0,6 Teilen $K_2CO_3$ bis zur einsetzenden Gasbildung (ca. 190° C) erhitzt. Nach Beendigung der $CO_2$-Entwicklung wird ein Monohydroxy-Polyester-Polyether mit einem mittleren Molekulargewicht von 800 erhalten.

b) Die Umsetzung zum Phosphorsäuremonoester erfolgt analog zu Beispiel 1b.

Beispiel 8 bis 33:

Es wird verfahren wie in vorstehenden Beispielen beschrieben, jedoch werden die dort eingesetzten Rohstoffe durch die in Tabelle 1 aufgeführten Ausgangsmaterialien ersetzt.

Tabelle 1

| Beispiel Nr. | Ausgangsmaterialien | Mol [1] | $\bar{M}n$ [2] | Verfahren [3] |
|---|---|---|---|---|
| | Tripropylenglykolmonomethylether | 1.0 | | |
| 8 | Caprolacton | 5.2 | 800 | 1 |
| | Tripropylenglykolmonomethylether | 1.0 | | |
| 9 | Caprolacton | 2.7 | 500 | 1 |
| | Dipropylenglykolmonomethylether | 1.0 | | |
| 10 | Caprolacton | 3.0 | 500 | 1 |
| | Ethoxilierter C9-C11-Fettalkohol Mn=270 | 1.0 | | |
| 11 | Caprolacton | 4.7 | 800 | 1 |
| | Ethyltriglykol | 1.0 | | |
| 12 | Caprolacton | 2.9 | 500 | 1 |
| | Methoxypolyethylenglykol Mn= 350 | 1.0 | | |
| 13 | Caprolacton | 23.3 | 3000 | 1 |
| | Methoxypolyethylenglykol Mn=750 | 1.0 | | |
| 14 | Caprolacton | 46.0 | 6000 | 1 |
| | Nonylphenolethoxilat Mn=360 | 1.0 | | |
| 15 | Valerolacton | 6.4 | 1000 | 1 |
| | Methoxypolyethylenglykol Mn=750 | 1.0 | | |
| 16 | Valerolacton | 7.5 | 1500 | 1 |
| | Tripropylenglykolmonomethylether | 1.0 | | |
| 17 | Caprolacton | 5.2 | 800 | 2 |
| | Dipropylenglykolmonomethylether | 1.0 | | |
| 18 | Caprolacton | 3.0 | 500 | 2 |
| | Ethoxilierter C9-C11-Fettalkohol Mn=270 | 1.0 | | |
| 19 | Caprolacton | 4.7 | 800 | 2 |
| | Methoxypolyethylenglykol Mn=350 | 1.0 | | |
| 20 | Caprolacton | 23.3 | 3000 | 2 |
| | Nonylphenolethoxilat Mn=360 | 1.0 | | |
| 21 | Valerolacton | 6.4 | 1000 | 2 |

Tabelle 1

| Beispiel Nr. | Ausgangsmaterialien | Mol [1] | $\bar{M}n$ [2] | Verfahren [3] |
|---|---|---|---|---|
| | Methoxypolyethylenglykol Mn=750 | 1.0 | | |
| 22 | Valerolacton | 7.5 | 1500 | 2 |
| | Phthalsäureanhydrid | 2.8 | 800 | 3 |
| 23 | Dipropylenglykol | 2.8 | | |
| | Decanol-gestarteter Caprolactonpolyester Mn=400 | 1.0 | | |
| 24 | Decandicarbonsäure | 2.2 | 800 | 3 |
| | Dipropylenglykol | 2.2 | | |
| | Decanol-gestarteter Caprolactonpolyester Mn=400 | 1.0 | | |
| 25 | Adipinsäure | 2.8 | 800 | 3 |
| | Dipropylenglykol | 2.8 | | |
| | Decanol-gestarteter Caprolactonpolyester Mn= 400 | 1.0 | | |
| 26 | Adipinsäure | 2.8 | 800 | 4 |
| | Dipropylenglykol | 2.8 | | |
| | Methoxpolyethylenglykol Mn=350 | 1.0 | | |
| 27 | 12-Hydroxystearinsäure | 3 | 1290 | 4 |
| | Methoxypolyethylenglykol Mn=350 | 1.0 | | |
| 28 | 12-Hydroxystearinsäure | 1.5 | 800 | 3 |
| | Methoxypolyethylenglykol Mn=350 | 1.0 | | |
| 29 | Toluylendiisocyanat | 1.0 | 640 | 5 |
| | Hexandiol-1,6 | 1.0 | | |
| | Methoxypolyethylenglykol Mn=350 | 1.0 | | |
| 30 | Isophorondiisocyanat | 1.0 | 770 | 5 |
| | Dodecandiol-1,12 | 1.0 | | |
| | Methoxypolyethylenglykol Mn=350 | 1.0 | | |
| 31 | Isophorondiisocyanat | 2.0 | 1200 | 5 |
| | Dodecandiol-1,12 | 2.0 | | |
| | Methoxypolyethylenglykol Mn=350 | 1.0 | | |
| 32 | Isophorondiisocyanat | 2.0 | 1200 | 6 |
| | Dodecandiol-1,12 | 2.0 | | |

Tabelle 1

| Beispiel Nr. | Ausgangsmaterialien | Mol [1] | $\bar{M}n$ [2] | Verfahren [3] |
|---|---|---|---|---|
| | Ethoxilierter C9-C11-Fettalkohol Mn=530 | 1.0 | | |
| 33 | Isophorondiisocyanat | 2.0 | 870 | 5 |
| | Hexandiol-1,6 | 2.0 | | |

1) Eingesetzte Menge in Mol
2) Mittleres Molekulargewicht der in Schritt a) erhaltenen Monohydroxyverbindung
3) Nr. des Beispiels, in dem das Verfahren beschrieben ist

Wie bereits oben erwähnt, besteht eine bevorzugte Ausführungsform der Erfindung darin, daß der Rest R keine Urethangruppe enthält.

Wenn die Gruppe $-(O\text{-}R)_n$ in Formel I nur Ester- und Ethergruppen enthält, und wenn in diesen Gruppen die Polyesterteile und die Polyetherteile in Form von nur zwei Blöcken vorliegen, könnte die Gruppe R durch die folgende Formel dargestellt werden:

$$-[(CH_2)_x-\overset{O}{\overset{\|}{C}}-O-]_y-[(CH_2)_2-O]_z-R_1$$

worin $R_1$ eine Alkylgruppe mit 1 bis 4 C-Atomen ist, x für 4 bis 5, y für 2 bis 15 und z für 3 bis 15 stehen.

Bei den obigen Zahlenwerten handelt es sich um Mittelwerte, da bekanntlich bei derartigen Polymeren Verbindungen immer Gemische von unterschiedlichen Verbindungen den üblichen Molekulargewichtsverteilungskurven vorliegen.

## Anwendungsbeispiele

### Verwendungsbeispiel 1

Zur Prüfung der Wirksamkeit der erfindungsgemäßen Phosphorsäureester wurden folgende Mischungen hergestellt und die Viskosität mit dem Brookfield-Viskosimeter (RVT Spindel 7, 10 U/Min.) ermittelt:

60 Teile ungesättigte Polyesterharzlösung (Säurezahl 19 - 23 mg/KOH x $g^{-1}$, 68 - 70 % ungesättigtes Polyesterharz gelöst in Monostyrol).
40 Teile Polystyrollösung (32 - 24 % Polystyrol gelöst in Styrol)
3,5 Teile Zinkstearat (Gleitmittel)
1,5 Teile tertiäres Butylperbenzoat
180 Teile Aluminiumhydroxid (z. B. Martinal® ON 310/Martinal® OL 104,2:1)
0 bzw. 3,6 Teile erfindungsgemäßer Phosphorsäureester

Dazu wurden die ungesättigte Polyesterharzlösung, die Polystyrollösung, das tertiäre Butylperbenzoat und der erfindungsgemäße Phosphorsäureester mit einem Schnellrührer (Dissolver) homogenisiert, anschließend erfolgte die Zugabe der feststoffe Aluminiumhydroxid und Zinkstearat. Nach einer Lagerzeit von 1 Std. bei 23° C wurde die Viskosität gemessen:

| Erfindungsgemäßer Phosphorsäureester | Viskosität (mPas) |
|---|---|
| - | 621 600 |
| Beispiel 1 | 354 100 |
| Beispiel 12 | 210 000 |
| Beispiel 13 | 225 300 |

Fortsetzung der Tabelle auf der nächsten Seite

(fortgesetzt)

| Erfindungsgemäßer Phosphorsäureester | Viskosität (mPas) |
|---|---|
| Beispiel 17 | 289 600 |
| Beispiel 21 | 315 200 |
| Beispiel 25 | 387 100 |
| Beispiel 31 | 364 900 |

**Verwendungsbeispiel 2**

Es wurden Mischungen wie bei Verwendungsbeispiel 1, jedoch nit erhöhtem Anteil an Aluminiumhydroxid hergestellt und die Viskosität der Harzpasten gemessen:

| Erfindungsgemäßer Phosphorsäureester (2 % berechnet auf Aluminiumhydroxid) | Aluminiumhydroxid (Teile) | Viskosität (mPas) |
|---|---|---|
| -- | 180 | 621 600 |
| Beispiel 10 | 250 | 426 300 |
| Beispiel 12 | 250 | 394 200 |
| Beispiel 20 | 250 | 483 700 |
| Beispiel 21 | 250 | 503 900 |
| Beispiel 30 | 250 | 584 900 |
| Beispiel 10 | 260 | 570 700 |
| Beispiel 12 | 260 | 497 600 |
| Beispiel 20 | 260 | 604 800 |
| Beispiel 21 | 260 | 642 400 |
| Beispiel 12 | 270 | 627 000 |

Dieses Beispiel zeigt deutlich, daß durch den Einsatz der erfindungsgemäßen Phosphorsäureester der Anteil an Aluminiumhydroxid drastisch erhöht werden kann unter Beibehaltung oder Erniedrigung der ursprünglichen Viskosität des Systems.

**Verwendungsbeispiel 3**

Es wurden Mischungen mit andersartigen Thermoplastkomponenten und Füllstoffen hergestellt und die Viskosität mit dem Brookfield Viskosimeter RVT gemessen:

70 Teile ungesättigte Polyesterharzlösung (Säurezahl 25 - 29 mg KOH/g, 67 % ungesättigtes Polyesterharz gelöst in Styrol)
30 Teile Styrolbutadiencopolymerlösung (30 Teile Styrolbutadiencopolymer gelöst in Styrol)
1,5 Teile tertiäres Butylperbenzoat
3,5 Teile Zinkstearat (Gleitmittel)
180 Teile $CaCO_3$ (Millicarb®)

Dabei wurden zunächst die flüssigen Rezepturbestandteile homogenisiert und anschließend das Zinkstearat und der füllstoff eingearbeitet. Nach einstündiger Lagerung bei 23° C wurde die Viskosität gemessen:

| Erfindungsgemäßer Phosphorsäureester | Teile Phosphorsäureester | Viskosität (mPas) |
|---|---|---|
| -- | -- | 282 400 |
| Beispiel 2 | 3,6 | 152 400 |
| Beispiel 12 | 3,6 | 94 000 |
| Beispiel 13 | 3,6 | 105 700 |
| Beispiel 18 | 3,6 | 136 900 |

Fortsetzung der Tabelle auf der nächsten Seite

(fortgesetzt)

| Erfindungsgemäßer Phosphorsäureester | Teile Phosphorsäureester | Viskosität (mPas) |
|---|---|---|
| Beispiel 21 | 3,6 | 146 100 |
| Beispiel 25 | 3,6 | 162 800 |
| Beispiel 31 | 3,6 | 151 600 |

**Verwendungsbeispiel 4**

Mit einem Schnellrührer (Dissolver) wurden folgende Mischungen hergestellt:

70 Teile ungesättigte Polyesterharzlösung (Säurezahl 25 - 29 MgKOH/g, 67 % ungesättigtes Polyesterharz gelöst in Styrol)
30 Teile Styrolbutadiencopolymerlösung (30 Teile Styrolbutadiencopolymer gelöst in Styrol)
1,8 Teile tertiäres Butylperbenzoat
4,5 Teile Zinkstearat
3,5 Teile Magnesiumoxidpaste (Luvatol® MK 35) (Eindickungsmittel)
3,0 Teile Styrol
5,0 Teile Pigmentpaste
220 Teile $CaCO_3$
3,3 Teile Phosphorsäurester von Beispiel 21 bzw. 0 Teile bei Vergleichsversuch

Auf einer Prepreganlage wurden geschnittene Glasfaserrovings (2,5 cm lang) zwischen Polyethylenfolien mit der Mischung getränkt und anschließend 4 Tage bei 23° C gelagert. Nach Entfernen der Abdeckfolien ließ sich die imprägnierte Masse in einer Stahlform (40 x 30 cm) zu 2,0 und 4,0 dicken Formteilen verpressen; (Preßdruck 80 bar, Formtemperatur oben 150° C, Formtemperatur unten 145° C, Preßzeit 2 bzw. 4 Min.). Der Glasfasergehalt betrug 24 %. Die Formteile zeigten einwandfreie Oberflächen, an der keine Lunker und unbenetzte Glasfaserrovings erkennbar waren. Bei dem Versuch, ohne Zusatz der erfindungsgemäßen Phosphorsäureester zu arbeiten, war die Einarbeitung der Füllstoffmenge in die Mischung äußerst schwierig und langwierig. Auf der Prepreganlage ließ sich die Mischung aufgrund der hohen Viskosität nicht gleichmäßig auf die Polyethylenfolien auftragen, die Glasfaserbenetzung war sehr unzureichend.

**Verwendungsbeispiel 5**

Mit dem nach Beispiel 1 erhaltenen Phosphorsäureester wurde eine Pigmentpaste hergestellt. Hierzu wurden 386,5 g C.I. 1 Pigment White 6 (77,3 %), 6,0 g Phosphorsäureester aus Beispiel 1, 88,5 g Methoxypropylacetat und 300 g Glasperlen zusammengegeben und anschließend unter Verwendung einer Polypropylenscheibe von 40 mm Durchmesser 20 Min. bei 40° C dispergiert. Nach dem Abfiltrieren der Glasperlen wurde eine fließfähige Pigmentpaste mit ausgezeichneten rheologischen Eigenschaften erhalten. Durch Zugabe von 20 % dieser Pigmentpaste zu einem Acryl-Melamin-Klarlack (58,1 % fremdvernetzendes Acrylharz, 14,9 % Melaminharz, 27 % Aromatenfraktion, Kp = 163 - 181° C) und zu einem Aldehydharz-Klarlack (42,8 % Aldehydharz, 57,2 % Xylol) wurden hochglänzende Lackfilme mit einwandfreier Oberfläche erhalten.

Wurde unter gleichen Bedingungen mit demselben Pigment eine fließfähige Pigmentpaste ohne Zugabe des Phosphorsäureesters hergestellt, konnte ein maximaler Pigmentgehalt von 42 % erreicht werden. Wenn der Pigmentgehalt erhöht wurde, war die Paste nicht mehr fließfähig.

Mit anderen Pigmenten wurden ähnliche Ergebnisse erhalten (in Methoxypropylacetat als Lösungsmittel):

| Pigment | Pigmentgehalt der Paste mit Phosphorsäureester | % Phosphorsäureester nach Beispiel 1 | Pigmentgehalt ohne Verwendung von Phosphorsäureester (O-Probe) |
|---|---|---|---|
| C.I.1 PR 101 | 75,1 % | 2,80 % | 50,0 % |
| Gasruß Regular Color Channel | 9,1 % | 4,0 % | 6,3 % |
| C.I.PR 177 | 12,3 % | 3,2 % | 7,8 % |

Verwendungsbeispiel 6

Aus dem nach Beispiel 1 hergestellten Phosphorsäureester wurde durch Neutralisation mit 2-(Diethylamino)ethanol ein Salz hergestellt. Mit einer 5 gewichts-%-igen wäßrigen Lösung dieses Salzes wurden Glasfaserrovings so getränkt, daß nach Trocknung der Rovings der Gehalt an Phosphorsäureester 0,5 Gewichts-% bezogen auf das Glas betrug. Aus einer Mischung von 65 Gewichtsteilen der so nachbehandelten Glasfaser und 35 Gewichtsteilen einer 65 gewichts-%-igen ungesättigten Polyesterharzlösung in Styrol, 3,5 Gewichtsteilen Zinkstearat und 1,5 Gewichtsteilen Tertiärbutylperbenzoat wurden in einer Presse (Pressdruck 85 bar) bei 150°C Formteile hergestellt. Aus den daraus gefertigten Prüfstäben wurde gemäß DIN EN 63 eine Biegefestigkeit von 1420 N/mm$^2$ und ein Biegeelastizitätsmodul von 41,6 kN/mm$^2$ gemessen.

Wurden unter gleichen Bedingungen Prüfstäbe mit nicht nachbehandelter Glasfaser hergestellt, zeigten diese eine Biegefestigkeit von nur 1250 N/mm$^2$ und ein Biege-E-Modul von nur 39,3 kN/mm$^2$.

## Patentansprüche

1. Phosphorsäureester und deren Salze der Formel (I)

$$(OH)_{3-n}-\overset{\overset{O}{\|}}{P}-(O-R)_n \qquad (I)$$

**dadurch gekennzeichnet**, daß R einen mindestens ein Ethersauerstoffatom (-O- ) und mindestens eine Carbonsäureestergruppe (-COO-) und/oder Urethangruppe (-NHCOO-) enthaltenden aliphatischen, cycloaliphatischen und/oder aromatischen Rest ohne Zerewitinoff-Wasserstoff mit einem mittleren Molekulargewicht $\overline{M}_n$ von 200 bis 10000 darstellt, wobei die Wasserstoffatome der aliphatischen Gruppen teilweise durch Halogenatome ersetzt sein können, und wobei das Verhältnis der Zahl der Ethersauerstoffatome zu der Zahl der Carbonsäureestergruppen und/oder Urethangruppen in jeder Gruppe R im Bereich von 1:20 bis 20:1 vorliegt, und daß n für 1 oder 2 steht, wobei solche Phosphorsäureester ausgenommen sind, bei denen R ein von Urethangruppen freier Monoester einer monofunktionellen Fettsäure und eines Polyols ist.

2. Phosphorsäureester nach Anspruch 1, dadurch gekennzeichnet, daß R den Rest eines Carbonsäureester- und/oder Urethangruppen enthaltenden oxalkylierten Monoalkohols darstellt.

3. Phosphorsäureester nach Anspruch 1, dadurch gekennzeichnet, daß R den Rest eines Carbonsäureester- und/oder Urethangruppen enthaltenden ($C_1$-$C_4$)-oxalkylierten Monoalkohols darstellt.

4. Phosphorsäureester nach Anspruch 1, dadurch gekennzeichnet, daß R den Rest eines Carbonsäureester- und/oder Urethangruppen enthaltenden ethoxylierten Monoalkohols darstellt.

5. Phosphorsäureester nach einem oder mehreren der Ansprüche 1 bis 4, dadurch gekennzeichnet, daß das Verhältnis der Zahl der Ethersauerstoffatome zu der Zahl der Carbonsäureestergruppen und/oder Urethangruppen im Bereich von 1:10 bis 10:1 liegt.

6. Phosphorsäureester nach Anspruch 5, dadurch gekennzeichnet, daß das Verhältnis der Zahl der Ethersauerstoffatome zu der Zahl der Carbonsäureestergruppen und/oder Urethangruppen im Bereich von 1:5 bis 5:1 liegt.

7. Phosphorsäureester nach einem oder mehreren der Ansprüche 1 bis 6, dadurch gekennzeichnet, daß die Gruppe R ein mittleres Molekulargewicht $\overline{M}_n$ von 300 bis 5000 hat.

8. Phosphorsäureester nach Anspruch 7, dadurch gekennzeichnet, daß die Gruppe R ein mittleres Molekulargewicht $\overline{M}_n$ von 400 bis 2000 hat.

9. Phosphorsäureester nach einem oder mehreren der Ansprüche 1 bis 8, dadurch gekennzeichnet, daß auf die Summe von 10 Ethersauerstoffatomen und Carbonsäureestergruppen höchstens eine Urethangruppe entfällt.

10. Phosphorsäureester nach Anspruch 9, dadurch gekennzeichnet, daß die Gruppe R keine Urethangruppe enthält.

**11.** Phosphorsäureester nach Anspruch 10, dadurch gekennzeichnet, daß die Gruppe R folgenden Aufbau hat:

$$-[(CH_2)_x-\overset{\overset{\displaystyle O}{\|}}{C}-O-]_y-[(CH_2)_2-O]_z-R_1$$

worin $R_1$ eine Alkylgruppe mit 1 bis 4 C-Atomen ist, x für 4 bis 5, y für 2 bis 15 und z für 3 bis 15 stehen.

**12.** Verfahren zur Herstellung eines Phosphorsäureesters und deren Salze mit der Formel (I)

$$(HO)_{3-n}-\overset{\overset{\displaystyle O}{\|}}{P}-(O-R)_n \qquad (I)$$

worin R einen mindestens ein Ethersauerstoffatom (-O-) und mindestens eine Carbonsäureestergruppe (-COO-) und/oder Urethangruppe (-NHCOO-) enthaltenden aliphatischen, cycloaliphatischen und/oder aromatischen Rest ohne Zerewitinoff-Wasserstoff mit einem mittleren Molekulargewicht $\overline{M}_n$ von 200 bis 10000 darstellt, wobei die Wasserstoffatome der aliphatischen Gruppen teilweise durch Halogenatome ersetzt sein können, und wobei das Verhältnis der Zahl der Ethersauerstoffatome zu der Zahl der Carbonsäureestergruppen und/oder Urethangruppen in jeder Gruppe R im Bereich von 1:20 bis 20:1 vorliegt, wobei n für 1 oder 2 steht und solche Phosphorsäureester ausgenommen sind, bei denen R ein von Urethangruppen freier Monoester einer monofunktionellen Fettsäure und eines Polyols ist, dadurch gekennzeichnet, daß 1 Phosphorsäureäquivalent einer Esterbildenden Phosphorverbindung mit 1 bis 2 Äquivalenten einer Verbindung

ROH

umgesetzt wird, worin R die obige Bedeutung hat, und daß der erhaltene Phosphorsäureester gegebenenfalls in das Salz überführt wird.

**13.** Verfahren nach Anspruch 12, dadurch gekennzeichnet, daß R den Rest eines Carbonsäureester- und/oder Urethangruppen enthaltenden oxalkylierten Monoalkohols darstellt.

**14.** Verfahren nach Anspruch 12, dadurch gekennzeichnet, daß R den Rest eines Carbonsäureester- und/oder Urethangruppen enthaltenden ($C_1$-$C_4$)-oxalkylierten Monoalkohols darstellt.

**15.** Verfahren nach Anspruch 12, dadurch gekennzeichnet, daß R den Rest eines Carbonsäureester- und/oder Urethangruppen enthaltenden ethoxylierten Monoalkohols darstellt.

**16.** Verfahren nach einem oder mehreren der Ansprüche 12 bis 15, dadurch gekennzeichnet, daß das Verhältnis der Zahl der Ethersauerstoffatome zur Zahl der Carbonsäureestergruppen und/oder Urethangruppen im Bereich von 1:10 bis 10:1 vorliegt.

**17.** Verfahren nach einem oder mehreren der Ansprüche 12 bis 15, dadurch gekennzeichnet, daß das Verhältnis der Zahl der Ethersauerstoffatome zur Zahl der Carbonsäurestergruppen und/oder Urethangruppen im Bereich von 1:5 bis 5:1 liegt.

**18.** Verfahren nach einem oder mehreren der Ansprüche 12 bis 17, dadurch gekennzeichnet, daß die Gruppe R ein mittleres Molekulargewicht $\overline{M}_n$ von 300 bis 5000 hat.

**19.** Verfahren nach einem oder mehreren der Ansprüche 12 bis 17, dadurch gekennzeichnet, daß die Gruppe R ein mittleres Molekulargewicht $\overline{M}_n$ von 400 bis 2000 hat.

**20.** Verfahren nach einem oder mehreren der Ansprüche 12 bis 19, dadurch gekennzeichnet, daß auf die Summe von 10 Ethersauerstoffatomen und Carbonsäureestergruppen höchstens eine Urethangruppe entfällt.

**21.** Verfahren nach einem oder mehreren der Ansprüche 12 bis 19, dadurch gekennzeichnet, daß die Gruppe R keine Urethangruppe enthält.

**22.** Verfahren nach Anspruch 21, dadurch gekennzeichnet, daß die Gruppe R folgenden Aufbau hat:

$$-[(CH)_2)_x-\overset{\overset{O}{\|}}{C}-O-]_y-[(CH_2)_2-O]_z-R_1$$

worin $R_1$ eine Alkylgruppe mit 1 bis 4 C-Atomen ist, x für 4 bis 5, y für 2 bis 15 und z für 3 bis 15 steht.

**23.** Lacke und Formmassen enthaltend einen oder mehrere der Phosphorsäureester der Formel (I) oder deren Salze nach den Ansprüchen 1 bis 22.

**24.** Verwendung der Phosphorsäureester der Formel (I) und deren Salze gemäß Ansprüchen 1 bis 22 als Dispergiermittel und als Dispersionsstabilisatoren.

**25.** In flüssige Systeme einzuarbeitende pulver- und faserförmige Feststoffe, die mit Dispergiermittel beschichtet sind, dadurch gekennzeichnet, daß sie mit einem oder mehreren Phosphorsäureestern der Formel (I) oder deren Salzen gemäß Ansprüchen 1 bis 22 beschichtet sind.

**26.** Pulver- und faserförmige Feststoffe nach Anspruch 25, dadurch gekennzeichnet, daß die Feststoffe Pigmente sind.

**27.** Pulver- und faserförmige feststoffe nach Anspruch 25, dadurch gekennzeichnet, daß die Feststoffe Füllstoffe für Kunststoffmassen sind.

**28.** Pulver- und faserförmige Feststoffe nach Anspruch 25, dadurch gekennzeichnet, daß sie als Paste vorliegen.

## Claims

**1.** Phosphoric acid esters and salts thereof having the formula (I)

$$(OH)_{3-n}-\overset{\overset{O}{\|}}{P}(O-R)_n \qquad (I)$$

characterised in that R is an aliphatic, cycloaliphatic and/or aromatic radical containing at least one ether oxygen atom (-0-) and at least one carboxylic acid ester group (-COO-) and/or urethane group (-NHCOO-) without Zerewitinoff hydrogen and with an average molecular weight $\overline{M}_n$ of 200 to 10000, the hydrogen atoms in the aliphatic groups being partly replaceable by halogen atoms, the ratio of the number of ether oxygen atoms to the number of carboxylic acid ester groups and/or urethane groups in each group R being in the range from 1 : 20 to 20 : 1 and n standing for 1 or 2, with exclusion of those phosphoric acid esters in which R is a monoester of a monofunctional fatty acid and a polyol, free from urethane groups.

**2.** Phosphoric acid esters according to claim 1, characterised in that R denotes the radical of an oxalkylated monoalcohol containing carboxylic acid ester and/or urethane groups.

**3.** Phosphoric acid esters according to claim 1, characterised in that R denotes the radical of a ($C_1$-$C_4$)-oxalkylated monoalcohol containing carboxylic acid ester and/or urethane groups.

**4.** Phosphoric acid esters according to claim 1, characterised in that R denotes the radical of an ethoxylated monoalcohol containing carboxylic acid ester and/or urethane groups.

**5.** Phosphoric acid esters according to one or more of claims 1 to 4, characterised in that the ratio of the number of ether oxygen atoms to the number of carboxylic acid ester groups and/or urethane groups is in the range from 1 : 10 to 10 : 1.

**6.** Phosphoric acid esters according to claim 5, characterised in that the ratio of the number of ether oxygen atoms

to the number of carboxylic acid ester groups and/or urethane groups is in the range from 1 : 5 to 5 : 1.

**7.** Phosphoric acid esters according to one or more of claims 1 to 6, characterised in that the group R has an average molecular weight $\overline{M}_n$ of 300 to 5000.

**8.** Phosphoric acid esters according to claim 7, characterised in that the group R has an average molecular weight $\overline{M}_n$ of 400 to 2000.

**9.** Phosphoric acid esters according to one or more of claims 1 to 8, characterised in that there is at most one urethane group per sum of 10 ether oxygen atoms and carboxylic acid ester groups.

**10.** Phosphoric acid esters according to claim 9, characterised in that the group R contains no urethane group.

**11.** Phosphoric acid esters according to claim 10, characterised in that the group R has the following structure:

$$-[(CH_2)_x-\overset{\overset{\displaystyle O}{\|}}{C}-O-]_y-[(CH_2)_2-O]_z\ -\ R_1$$

in which $R_1$ is an alkyl group with 1 to 4 carbon atoms, x stands for 4 to 5, y for 2 to 15 and z for 3 to 15.

**12.** A method of manufacturing a phosphoric acid ester and salts thereof having the formula (I)

$$(OH)_{3-n}-\overset{\overset{\displaystyle O}{\|}}{P}(O-R)_n \qquad (I)$$

wherein R is an aliphatic, cycloaliphatic and/or aromatic radical containing at least one ether oxygen atom (-0-) and at least one carboxylic acid ester group (-COO-) and/or urethane group (-NHCOO-) without Zerewitinoff hydrogen and with an average molecular weight $\overline{M}_n$ of 200 to 10000, the hydrogen atoms in the aliphatic groups being partly replaceable by halogen atoms, the ratio of the number of ether oxygen atoms to the number of carboxylic acid ester groups and/or urethane groups in each group R being in the range from 1 : 20 to 20 : 1 and n standing for 1 or 2, with exclusion of those phosphoric acid esters in which R is a monoester of a monofunctional fatty acid and a polyol, free from urethane groups, characterised in that one phosphoric acid equivalent of an ester-forming phosphorus compound is reacted with 1 to 2 equivalents of a compound

ROH

in which R has the aforementioned meaning, and the resulting phosphoric acid ester is optionally converted into the salt.

**13.** A method according to claim 12, characterised in that R denotes the radical of an oxalkylated monoalcohol containing carboxylic acid ester and/or urethane groups.

**14.** A method according to claim 12, characterised in that R denotes the radical of a ($C_1$-$C_4$)-oxalkylated monoalcohol containing carboxylic acid ester and/or urethane groups.

**15.** A method according to claim 12, characterised in that R is the radical of an ethoxylated monoalcohol containing carboxylic acid ester and/or urethane groups.

**16.** A method according to one or more of claims 12 to 15, characterised in that the ratio of the number of ether oxygen atoms to the number of carboxylic acid ester groups and/or urethane groups is in the range from 1 : 10 to 10 : 1.

**17.** A method according to one or more of claims 12 to 15, characterised in that the ratio of the number of ether oxygen atoms to the number of carboxylic acid ester groups and/or urethane groups is in the range from 1 : 5 to 5 : 1.

**18.** A method according to one or more of claims 12 to 17, characterised in that the group R has an average molecular weight $\overline{M}_n$ of 300 to 5000.

**19.** A method according to one or more of claims 12 to 17, characterised in that the group R has an average molecular weight $\overline{M}_n$ of 400 to 2000.

**20.** A method according to one more of claims 12 to 19, characterised in that there is at most one urethane group per sum of 10 ether oxygen atoms and carboxylic acid ester groups.

**21.** A method according to one or more of claims 12 to 19, characterised in that the group R contains no urethane group.

**22.** A method according to claim 21, characterised in that the group R has the following structure:

$$-[(CH_2)_x-\overset{\overset{\displaystyle O}{\|}}{C}-O-]_y-[(CH_2)_2-O]_z-R_1$$

in which $R_1$ is an alkyl group with 1 to 4 carbon atoms, x stands for 4 to 5, y for 2 to 15 and z for 3 to 15.

**23.** Lacquers and moulding compositions containing one or more of the phosphoric acid esters having the formula (I) or salts thereof according to claims 1 to 22.

**24.** Use of the formula (I) phosphoric acid esters and salts thereof according to claims 1 to 22 as dispersing agents and as dispersion stabilisers.

**25.** Pulverulent and fibrous solids for incorporating in liquid systems and coated with dispersing agents, characterised in that they are coated with one or more formula (I) phosphoric acid esters or salts thereof according to claims 1 to 22.

**26.** Pulverulent and fibrous solids according to claim 25, characterised in that the solids are pigments.

**27.** Pulverulent and fibrous solids according to claim 25, characterised in that the solids are fillers for plastics.

**28.** Pulverulent and fibrous solids according to claim 25, characterised in that they are in paste form.

## Revendications

**1.** Esters d'acides phosphoriques et leurs sels de formule (I)

$$(OH)_{3-n}-\overset{\overset{\displaystyle O}{\|}}{P}-(O-R)_n \qquad (I)$$

caractérisés en ce que R est un radical aliphatique, cycloaliphatique et/ou aromatique, contenant au moins un atome d'oxygène d'éther (-O-) et au moins un groupe ester d'acide carboxylique (-COO-) et/ou un groupe uréthanne (-NHCOO-), sans hydrogènes de Zerewitinoff, ayant une masse moléculaire moyenne $M_n$ de 200 à 10 000, les atomes d'hydrogène des groupes aliphatiques pouvant être partiellement remplacés par des atomes d'halogène, le rapport entre le nombre des atomes d'oxygène d'éther et le nombre des groupes ester d'acide carboxylique et/ou des groupes uréthanne dans chaque groupe R étant compris dans l'intervalle de 1:20 à 20:1, et en ce que n vaut 1 ou 2, à l'exclusion des esters d'acides phosphoriques dans lesquels R est un monoester, exempt de groupes uréthanne, d'un acide gras monofonctionnel et d'un polyol.

**2.** Esters d'acides phosphoriques selon la revendication 1, caractérisés en ce que R représente le résidu d'un monoalcool alcoxylé contenant des groupes ester d'acide carboxylique et/ou uréthanne.

**3.** Esters d'acides phosphoriques selon la revendication 1, caractérisés en ce que R représente le résidu d'un monoalcool alcoxylé en $C_1$-$C_4$, contenant des groupes ester d'acide carboxylique et/ou uréthanne.

**4.** Esters d'acides phosphoriques selon la revendication 1, caractérisés en ce que R représente le résidu d'un monoalcool éthoxylé contenant des groupes ester d'acide carboxylique et/ou uréthanne.

**5.** Esters d'acides phosphoriques selon l'une ou plusieurs des revendications 1 à 4, caractérisés en ce que le rapport du nombre des atomes d'oxygène d'éther au nombre des groupes ester d'acide carboxylique et/ou des groupes uréthanne est compris dans l'intervalle de 1:10 à 10:1.

**6.** Esters d'acides phosphoriques selon la revendication 5, caractérisés en ce que le rapport du nombre des atomes d'oxygène d'éther au nombre des groupes ester d'acide carboxylique et/ou uréthanne est compris dans l'intervalle de 1:5 à 5:1.

**7.** Esters d'acides phosphoriques selon l'une ou plusieurs des revendications 1 à 6, caractérisés en ce que le groupe R a une masse moléculaire moyenne $M_n$ de 300 à 5000.

**8.** Esters d'acides phosphoriques selon la revendication 7, caractérisés en ce que le groupe R a une masse moléculaire moyenne $M_n$ de 400 à 2000.

**9.** Esters d'acides phosphoriques selon l'une ou plusieurs des revendications 1 à 8, caractérisés en ce qu'à la somme de 10 atomes d'oxygène d'éther et groupes ester d'acide carboxylique correspond au plus un groupe uréthanne.

**10.** Esters d'acides phosphoriques selon la revendication 9, caractérisés en ce que le groupe R ne contient pas de groupe uréthanne.

**11.** Esters d'acides phosphoriques selon la revendication 10, caractérisés en ce que R a la structure suivante :

$$-[(CH_2)_x-\overset{\overset{\displaystyle O}{\|}}{C}-O-]_y - [(CH_2)_2-O]_z - R_1$$

dans laquelle $R_1$ est un groupe alkyle ayant de 1 à 4 atomes de carbone, x vaut 4 ou 5, y vaut de 2 à 15 et z vaut de 3 à 15.

**12.** Procédé pour préparer un ester d'acide phosphorique et ses sels, ayant la formule (I)

$$(OH)_{3-n}-\overset{\overset{\displaystyle O}{\|}}{P}-(O-R)_n \qquad (I)$$

dans laquelle R est un radical aliphatique, cycloaliphatique et/ou aromatique contenant au moins un atome d'oxygène d'éther (-O-) et au moins un groupe ester d'acide carboxylique (-COO-) et/ou un groupe uréthanne (-NHCOO-), sans hydrogène de Zerewitinoff, ayant une masse moléculaire moyenne $M_n$ de 200 à 10 000, les atomes d'hydrogène des groupes aliphatiques pouvant être partiellement remplacés par des atomes d'halogène, le rapport entre le nombre des atomes d'oxygène d'éther et le nombre des groupes ester d'acide carboxylique et/ou des groupes uréthanne de chaque groupe R étant compris dans l'intervalle de 1:20 à 20:1, n valant 1 ou 2, et à l'exclusion des esters d'acides phosphoriques dans lesquels R est un monoester exempt de groupes uréthanne d'un acide gras monofonctionnel et d'un polyol, caractérisé en ce qu'on fait réagir 1 équivalent d'acide phosphorique d'un composé phosphoré estérifiable avec 1 à 2 équivalents d'un composé ROH, où R a les significations ci-dessus, et en ce que l'ester d'acide phosphorique obtenu est éventuellement converti en le sel.

**13.** Procédé selon la revendication 12, caractérisé en ce que R est le résidu d'un monoalcool alcoxylé contenant des groupes ester d'acide carboxylique et/ou uréthanne.

**14.** Procédé selon la revendication 12, caractérisé en ce que R est le résidu d'un monoalcool alcoxylé en $C_1$-$C_4$ contenant des groupes ester d'acide carboxylique et/ou uréthanne.

**15.** Procédé selon la revendication 12, caractérisé en ce que R est le résidu d'un monoalcool alcoxylé contenant des groupes ester d'acide carboxylique et/ou uréthanne.

**16.** Procédé selon une ou plusieurs des revendications 12 à 15, caractérisé en ce que le rapport entre le nombre des atomes d'oxygène d'éther et le nombre des groupes ester d'acide carboxylique et/ou uréthanne est compris dans l'intervalle de 1:10 à 10:1.

**17.** Procédé selon l'une ou plusieurs des revendications 12 à 15, caractérisé en ce que le rapport entre le nombre des atomes d'oxygène d'éther et le nombre des groupes ester d'acide carboxylique et/ou uréthanne est compris dans l'intervalle de 1:5 à 5:1.

**18.** Procédé selon l'une ou plusieurs des revendications 12 à 17, caractérisé en ce que le groupe R a une masse moléculaire moyenne $M_n$ de 300 à 5000.

**19.** Procédé selon l'une ou plusieurs des revendications 12 à 17, caractérisé en ce que le groupe R a une masse moléculaire moyenne $M_n$ de 400 à 2000.

**20.** Procédé selon l'une ou plusieurs des revendications 12 à 19, caractérisé en ce qu'à la somme de 10 atomes d'oxygène d'éther et groupes ester d'acide carboxylique correspond au plus un groupe uréthanne.

**21.** Procédé selon l'une ou plusieurs des revendications 12 à 19, caractérisé en ce que le groupe R ne contient pas de groupe uréthanne.

**22.** Procédé selon la revendication 21, caractérisé en ce que le groupe R a la structure suivante :

$$-[(CH_2)_x-\overset{\overset{O}{\|}}{C}-O-]_y - [(CH_2)_2-O]_z - R_1$$

dans laquelle $R_1$ est un groupe alkyle ayant de 1 à 4 atomes de carbone, x vaut 4 ou 5, y vaut de 2 à 15 et z vaut de 3 à 15.

**23.** Vernis et mélanges à mouler contenant un ou plusieurs des esters d'acides phosphoriques de formule (I) ou leurs sels, selon les revendications 1 à 22.

**24.** Utilisation des esters d'acides phosphoriques de formule (I) et de leurs sels selon les revendications 1 à 22 comme dispersants et stabilisants de dispersion.

**25.** Substances solides en poudre et fibreuses, destinées à être incorporées dans des systèmes liquides, et qui sont enduites de dispersants, caractérisées en ce qu'elles sont enduites d'un ou plusieurs esters d'acides phosphoriques de formule (I) ou de leurs sels selon les revendications 1 à 22.

**26.** Substances solides en poudre et fibreuses selon la revendication 25, caractérisées en ce que les substances solides sont des pigments.

**27.** Substances solides en poudre et fibreuses selon la revendication 25, caractérisées en ce que les substances solides sont des matières de charge pour compositions plastiques.

**28.** Substances solides en poudre et fibreuses selon la revendication 25, caractérisées en ce qu'elles se présentent sous forme d'une pâte.